# EUROPEAN PATENT APPLICATION

(11) **EP 0 626 637 A1**
(43) Date of publication of application: **30.11.1994**
(21) Application number: 94303476.9
(22) Date of filing: 16.05.1994
(51) Int. Cl.: G06F 3/147, G09G 3/20

(54) **Circuitry and method for controlling a character oriented display in portable equipment**

(30) Priority: 18.05.1993 FI 932262
(71) Applicant: NOKIA MOBILE PHONES LTD., SF-24101 Salo (FI)
(72) Inventor: Pöysäri, Timo, SF-24100 Salo (FI)
(74) Representative: Frain, Timothy John

(57) **Abstract**

A display control circuit suitable for a paging device or other portable equipment, has the logic (1) of the display controller, the microcontroller and memory processing block (2), the signal memory (3) and the character generator (4) adapted to communicate by dedicated buses. Furthermore, a method for controlling the circuit is disclosed. Using the solution according to the invention a faster and more flexible provision to use country-specific special character sets is achieved.

## Description

The present invention relates to a display control circuit and a method for controlling a display circuit. In particular, the invention relates to controlling displays for portable equipment.

Whilst portable equipment such as radio telephones or paging devices are becoming increasingly smaller and more versatile, there has been a corresponding increase in the number of components used in such equipment. In particular, separate memories and display controllers occupy a major part of the circuit board and of the volume of such portable equipment. The wiring on the circuit boards, which are small in surface area, is also complex and multiple conductor layers have to be added to the circuit board. Typically, the greatest concentration of data transmission, in addition to the reception of signals, is between the memory circuits and the display controller.

Since the number of conductors should be minimized, circuits provided with a communications bus are often chosen. This slows down data communications since the bus has to be shared with other devices. Frequently circuits having a suitable bus are not available. As the amount of data for display increases, the demands placed on display controllers have correspondingly increased and it has been necessary to enhance their capacity and flexibility.

The development of commercial display controllers has concentrated mainly on providing facilities for large graphical panel displays. A graphic display requires larger storage and processing capacity from the controlling microcontroller then conventionally available, resulting in greater power consumption. Additionally, when using character-based display controllers flexible converting of characters is difficult and cannot be equally achieved, especially when using a fixed character generator in which the desired character set is stored. However, when using character based display controllers not nearly as much information needs to be transferred via the bus when updating the display. Thus, a simpler, slower and cheaper microcontroller can be used.

Decreased supply voltages for the control logic have been a problem recently since most conventional controllers are intended for use with a supply voltage of five volts only. This has accelerated a process to design and implement a suitable circuit for portable equipment and paging devices in particular.

In a first aspect of the invention there is provided a display control circuit for portable equipment, comprising a display, a display controller, a microcontroller and memory processing block, a signal memory, a character generator and a buffer, wherein the display controller, microcontroller, signal memory, character generator and buffer are adapted to communicate with each other via dedicated display control circuit buses.

This has the advantage that the relatively high data transfer associated with display control circuitry can take place quickly, since there are few problems of bus contention. Additionally, the fan out of individual circuit components needs to be less due to the dedicated buses and hence the power consumption can be reduced.

In a second aspect of the invention there is provided a method for controlling a display control circuit for portable equipment, comprising a display, a display controller, a microcontroller and memory processing block, a signal memory, a character generator and a buffer, wherein the display control circuit is formatted, a character set is loaded to the memory, the display control circuit waits for an incoming signal, and the received signal is stored in the memory, after which the display control circuit starts, when desired, to display the first signal.

A detailed embodiment of the invention is described below, by way of example only, and with reference to the appended drawings, in which:
Fig. 1 shows a block diagram of the display control circuit in accordance with the invention, and
Fig. 2 shows a functional flow diagram of the display control circuit in accordance with the invention.

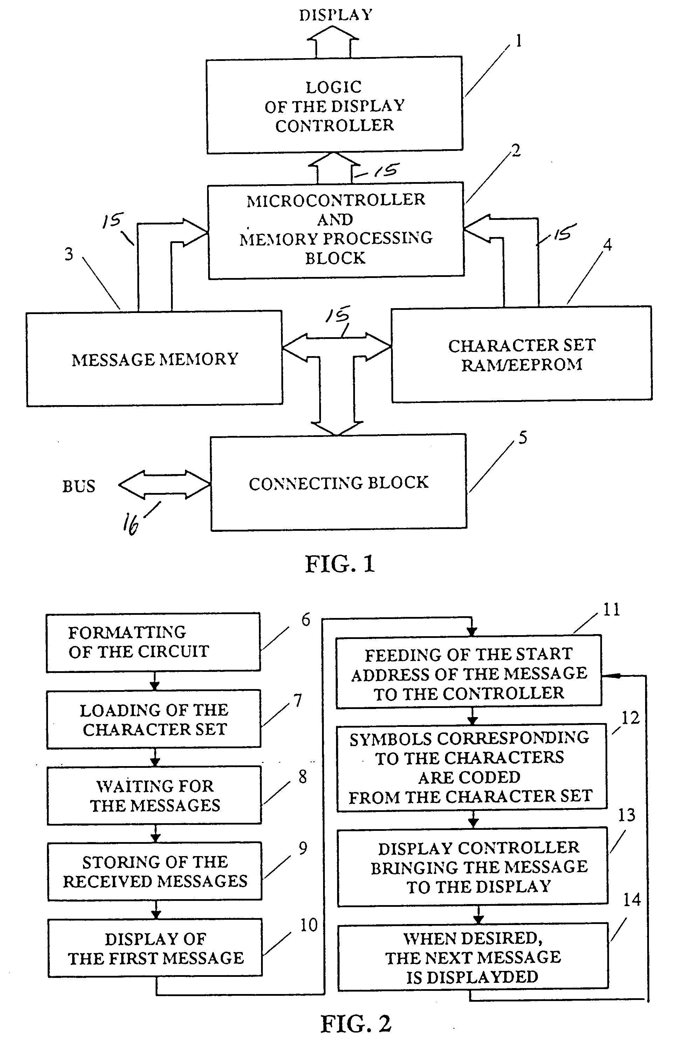

Fig. 1 schematically illustrates a display control circuit for a paging device in accordance with the invention. Display controller 1 controls the liquid crystal display which display the characters and the graphics.

Microcontroller 2 inputs to the display controller 1 data for a bit figure display or internal character generator (RAM) 4. All the functional elements of the display control circuit are connected via their own dedicated buses, independent of the main circuit board bus. Thus, there is very little bus contention between parts of the display control circuit and other components on the main circuit board.

The display controller 1 is connected to the circuit board bus via a buffer 5. Data from the bus is stored in signal memory (RAM) 3 of the display control circuit which is in the form of an integrated microcircuit. The display control circuit has extremely low power consumption and a wide working voltage range.

Fig. 2 illustrates a functional flow diagram of the display control circuit. First, the display control circuit is formatted 6, after which a character set for each country is loaded 7 into memory 3 of the paging device. Next, an incoming signal is anticipated 8 and upon receiving the signal it is stored 9 into memory 3. The signal can then be displayed 10 on the display unit whenever desired using an external command typically input to the paging device by a user.

When displaying the message corresponding to the signal the start address of the signal is first fed 11 into controller 2. Next, the symbols for driving the display and corresponding to the characters in the message are coded 12 from character set 4, after which the display controller 1 drives the signal onto display 13. After this, the process of bringing the next signal onto display 14 can be started if desired.

A configuration for a display control circuit as described above lends itself to the combination of the display controller, the RAM-memory 3 and an EEPROM-memory 4 when necessary, onto a single integrated circuit. Thus 3 to 5 individual circuit components can be replaced by one or two circuits depending on the size of the display.

The display control circuit is so designed that a memory page directed to the display can be freely defined from any point in memory 3. This results in a fast and flexible processing of the display because it is not necessary to transfer the data to a separate memory in the microcontroller and then to the display controller, but directly to the display controller. All that needs to be done is to indicate to the controller where in the memory the desired display page begins.

The silicon area of an integrated display control circuit would need to be widened if the number of pins is increased. However, the control logic of the display controller 1 does not need a wider area and thus there would be plenty of space left on the integrated circuit board for memory 3.

A part of the RAM-memory or the EEPROM-memory may be reserved for character generator 4. A convertible character set can be placed in the display control circuit which can be loaded into the device according to the needs of the customer or the country in which the portable equipment is located or to be used. In this way the best and cheapest way to meet the demands of a customer can be achieved.

By using a solution in accordance with the invention display controllers and memories can be integrated naturally. Thus an ever faster and more flexible provision for country-specific special character sets can be achieved.

In particular, the invention can be applied both in current alphameric RDS/MBS paging devices and alphameric POGSAC paging devices as well as in the devices of the Pan-European ERMES-system which is being developed. The paging devices of the ERMES-system require a large storage capacity as well as very flexible processing of the display and data.

In view of the foregoing description it will be evident to a person skilled in the art that various modifications may be made within the scope of the invention.

The scope of the present disclosure includes any novel feature or combination of features disclosed therein either explicitly or any generalisation thereof irrespective of whether or not it relates to the claimed invention or mitigates any or all of the problems addressed by the present invention. The applicant hereby gives notice that new claims may be formulated to such features during prosecution of this application or of any such further application derived therefrom.

## Claims

1. A display control circuit for portable equipment, comprising a display, a display controller (1), a microcontroller and memory processing block (2), a signal memory (3), a character generator (4) and a buffer (5), wherein the display controller (1), microcontroller (2), signal memory (3), character generator (4) and buffer (5) are adapted to communicate with each other via dedicated display control circuit buses (15).

2. A display control circuit according to claim 1, wherein the display controller (1), microcontroller (2), signal memory (3), character generator (4) and buffer (5) form an integrated circuit.

3. A display control circuit according to claim 1 or claim 2, wherein the buffer (5) is coupled to an external bus (16).

4. A display control circuit according to any preceding claim, wherein a memory page in the memory (3) can be freely defined from any point in the memory (3).

5. A display control circuit according to any preceding claim, wherein the signal memory (3) is RAM and further comprising an EEPROM.

6. A display control circuit according to any preceding claim wherein a part of the signal memory (3) or the EEPROM-memory is reserved for the character generator (4).

7. A display control circuit according to any preceding claim, adapted for alphameric RDS/MBS ERMES-system or POGSAC-system paging devices.

8. A method for controlling a display control circuit for portable equipment, comprising a display, a display controller (1), a microcontroller and memory processing block (2), a signal memory (3), a character generator (4) and a buffer (5), wherein the display control circuit is formatted (6), a character set is loaded to the memory (7), the display control circuit waits for an incoming signal (8), and the received signal is stored in the memory (9), after which the display control circuit starts, when desired, to display the first signal (10).

9. A method according to claim 8, wherein the display control circuit performs transmission of the signal to the display so that the start address of the signal is fed into the controller (11), the symbols corresponding to the characters are coded from the character set (12) and the display controller brings the signal onto the display (13), after which the display control circuit starts, when desired, to bring the next signal onto the display (14).

10. A method according to any of claims 7 to 9, wherein the character set may be user specific or correspond to a country in which the display control circuit is being used.
